# EUROPÄISCHE PATENTSCHRIFT

(11) **EP 3 298 473 B1**
(45) Veröffentlichungstag und Bekanntmachung des Hinweises auf die Patenterteilung: **26.06.2019**
(21) Anmeldenummer: 16711525.2
(22) Anmeldetag: 11.03.2016
(51) Int. Cl.: G06F 3/01, G06F 3/0354

(54) **BERÜHRUNGSSENSITIVE BEDIENVORRICHTUNG FÜR EIN FAHRZEUG**
TOUCH SENSITIVE CONTROL DEVICE FOR A VEHICLE
DISPOSITIF DE COMMANDE TACTILE POUR UN VÉHICULE

(30) Priorität: 21.05.2015 DE 102015006604
(43) Veröffentlichungstag der Anmeldung: 28.03.2018
(73) Patentinhaber: Audi AG, 85045 Ingolstadt (DE)
(72) Erfinder: KÜHNER, Manuel, 71706 Markgröningen (DE); MULLER, Ulrich, 85055 Ingolstadt (DE)
(86) Internationale Anmeldenummer: PCT/EP2016/000445
(87) Internationale Veröffentlichungsnummer: WO 2016/184535

(56) Entgegenhaltungen:
- EP-A1- 2 270 627
- JP-A- 2005 258 666

## Beschreibung

Die Erfindung betrifft ein Verfahren zum Betreiben einer Bedienvorrichtung für ein Fahrzeug gemäß dem Oberbegriff von Patentanspruch 1 sowie eine Bedienvorrichtung für ein Fahrzeug gemäß dem Oberbegriff von Patentanspruch 5.

Ein solches Verfahren zum Betreiben einer Bedienvorrichtung für ein Fahrzeug, insbesondere ein Kraftfahrzeug, sowie eine Bedienvorrichtung für ein Fahrzeug, insbesondere ein Kraftfahrzeug, sind beispielsweise bereits der DE 10 2004 040 886 A1 als bekannt zu entnehmen. Die Bedienvorrichtung weist dabei wenigstens ein Bedienelement mit einer berührungsempfindlichen Oberfläche auf. Das Bedienelement ist beispielsweise als berührungsempfindlicher Bildschirm, das heißt als sogenannter Touchscreen, ausgebildet, sodass eine Person, beispielsweise der Fahrer des Fahrzeugs, mittels des Bedienelements Eingaben in die Bedienvorrichtung vornehmen kann. Hierzu berührt die Person die Oberfläche an jeweiligen Stellen. Mit anderen Worten sind mittels des Bedienelements von einer Person durch Berühren der Oberfläche Eingaben in die Bedienvorrichtung durchführbar.

Die Bedienvorrichtung umfasst ferner eine Erfassungseinrichtung, mittels welcher jeweilige Stellen, an denen die Person die Oberfläche nacheinander berührt, erfasst werden. Berührt die Person beispielsweise die berührungsempfindliche Oberfläche an einer ersten Stelle, so wird diese erste Stelle mittels der Erfassungseinrichtung erfasst. Hierdurch wird beispielsweise eine erste Eingabe in die Bedienvorrichtung bewirkt, wodurch beispielsweise eine erste Funktion des Fahrzeugs bewirkt werden kann. Daran anschließend kann die Person die berührungsempfindliche Oberfläche beziehungsweise das Bedienelement beispielsweise an einer von der ersten Stelle unterschiedlichen, zweiten Stelle berühren, wobei die zweite Stelle ebenfalls mittels der Erfassungseinrichtung erfasst wird. Durch das Berühren der Oberfläche an der zweiten Stelle nimmt die Person beispielsweise eine zweite Eingabe vor, wodurch beispielsweise eine von der ersten Funktion unterschiedliche, zweite Funktion des Fahrzeugs bewirkt wird.

Ferner umfasst die Bedienvorrichtung eine Bewegungseinrichtung, welche zumindest ein Abtriebselement aufweist. Die Bewegungseinrichtung umfasst beispielsweise einen Aktor insbesondere in Form eines elektrischen Aktors wie beispielsweise eines Elektromagneten oder eines Elektromotors. Der Aktor umfasst beispielsweise wenigstens ein stehendes Teil und wenigstens ein relativ zu dem stehenden Teil bewegbares Teil, welches relativ zu dem stehenden Teil translatorisch und/oder rotatorisch bewegbar ist. Im Falle des Elektromotors wird das stehende Teil auch als Stator, im Falle des Elektromagneten als Joch bezeichnet. Das bewegbare Teil wird im Falle des Elektromotors auch als Läufer oder Rotor im Falle des Elektromagneten als Anker bezeichnet. Dabei ist das bewegbare Teil beispielsweise das Abtriebselement oder Bestandteil des Abtriebselements. Mittels des Abtriebselements wird zur Erzeugung jeweiliger haptischer Rückmeldungen an die Person infolge des jeweiligen Berührens der Stellen der Oberfläche das Bedienelement durch Bewegen des Abtriebselements bewegt. Die Bewegungseinrichtung ist über das Abtriebselement mit dem Bedienelement gekoppelt, sodass das Bedienelement mittels der Bewegungseinrichtung über das Abtriebselement bewegt werden kann, indem das Abtriebselement, das heißt beispielsweise das bewegbare Teil relativ zum stehenden, bewegt wird. Mit anderen Worten werden das Abtriebselement und über dieses das Bedienelement bewegt, um dadurch jeweilige haptische Rückmeldungen an die Person zu erzeugen, wenn die Person die Oberfläche an den jeweiligen Stellen berührt.

Durch eine solche haptische Rückmeldung an die Person ist es möglich, der Person haptisch rückzumelden beziehungsweise zu vermitteln, dass die jeweils gewünschte Eingabe erfolgreich war. Darunter ist beispielsweise zu verstehen, dass die jeweils gewünschte Funktion durch die jeweilige Eingabe erfolgreich bewirkt wurde.

Bei der DE 10 2004 040 886 A1 ist es vorgesehen, die Bewegungen des Bedienelements und somit die jeweilige haptische Rückmeldung zu variieren, sodass die Person - wenn die Person die berührungsempfindliche Oberfläche an unterschiedlichen Stellen berührt - unterschiedliche haptische Rückmeldungen wahrnimmt beziehungsweise erfährt. Hierbei wird die Bewegung des Bedienelements beziehungsweise die haptische Rückmeldung hinsichtlich ihrer Stärke, ihrer Art, ihrer Dauer und/oder ihres Auslösezeitpunkts variiert beziehungsweise unterschiedlich gestaltet.

Ferner offenbart die US 2014/0368445 A1 eine Bedienvorrichtung mit einem Bedienelement, welches eine berührungsempfindliche Oberfläche aufweist. Ferner ist ein Aktor vorgesehen, mittels welchem zum Erzeugen haptischer Rückmeldungen das Bedienelement bewegbar ist. Dabei ist es vorgesehen, die Bewegung des Bedienelements und somit die haptische Rückmeldung in ihrer Amplitude, Frequenz, Richtung oder Muster zu variieren, sodass eine die berührungsempfindliche Oberfläche berührende Person unterschiedliche haptische Rückmeldungen beziehungsweise unterschiedliche Bewegungen des Bedienelements beziehungsweise der berührungsempfindlichen Oberfläche haptisch wahrnehmen kann.

Des Weiteren ist aus der US 2012/0050199 A1 eine berührungsempfindliche Bedienvorrichtung bekannt, mit einem eine berührungsempfindliche Oberfläche aufweisenden Bedienelement und mit einem Aktor, mittels welchem das Bedienelement bewegbar ist, um dadurch eine haptische Rückmeldung an eine die berührungsempfindliche Oberfläche berührende Person zu erzeugen.

Die EP 2 270 627 A1 offenbart ein Verfahren und eine Einrichtung zum Bereitstellen einer haptischen Rückmeldung.

Des Weiteren ist aus der JP 2005 258666 A ein mobiles Endgerät mit einem berührungsempfindlichen Bildschirm bekannt, welcher durch Aktoren in Vibration versetzt werden kann.

Aufgabe der vorliegenden Erfindung ist es, ein Verfahren und eine Bedienvorrichtung der eingangs genannten Art derart weiterzuentwickeln, dass eine besonders vorteilhafte, angenehme und hochwertige Bedienung der Bedienvorrichtung realisierbar ist.

Diese Aufgabe wird durch ein Verfahren mit den Merkmalen des Patentanspruchs 1 sowie durch eine Bedienvorrichtung mit den Merkmalen des Patentanspruchs 5 gelöst. Vorteilhafte Ausgestaltungen mit zweckmäßigen Weiterbildungen der Erfindung sind in den übrigen Ansprüchen angegeben. Ein erster Aspekt der Erfindung betrifft ein Verfahren zum Betreiben einer Bedienvorrichtung für ein Fahrzeug, insbesondere ein Kraftfahrzeug wie beispielsweise ein Personenkraftfahrzeug. Die Bedienvorrichtung weist wenigstens ein eine berührungsempfindliche Oberfläche aufweisendes Bedienelement wie beispielsweise einen berührungsempfindlichen Bildschirm, das heißt einen Touchscreen, auf, mittels welchem von einer Person durch Berühren der Oberfläche Eingaben in die Bedienvorrichtung durchführbar sind. Ferner umfasst die Bedienvorrichtung eine Erfassungseinrichtung, mittels welcher jeweilige Stellen, an denen die Person die Oberfläche nacheinander berührt, erfasst werden. Mit anderen Worten kann die Person die berührungsempfindliche Oberfläche an unterschiedlichen Stellen zeitlich nacheinander berühren, um dadurch nacheinander Eingaben, insbesondere unterschiedliche Eingaben, durchzuführen. Durch diese nacheinander durchgeführten Eingaben können beispielsweise unterschiedliche Funktionen des Fahrzeugs zeitlich nacheinander bewirkt werden.

Die Bedienvorrichtung umfasst ferner eine Bewegungseinrichtung, welche zumindest ein Abtriebselement aufweist, mittels welchem zur Erzeugung jeweiliger haptischer Rückmeldungen an die Person infolge des jeweiligen Berührens der Stellen der Oberfläche das Bedienelement durch Bewegen des Abtriebselements bewegt wird. Mit anderen Worten wird das Abtriebselement bewegt, um dadurch jeweils wenigstens eine Bewegung des Bedienelements und somit der berührungsempfindlichen Oberfläche zu erzeugen, wodurch jeweils eine haptische Rückmeldung an die Person erzeugt wird. Die die berührungsempfindliche Oberfläche an der jeweiligen Stelle berührende Person kann nämlich die jeweilige, durch Bewegen des Abtriebselements bewirkte Bewegung des Bedienelements und somit der berührungsempfindlichen Oberfläche haptisch wahrnehmen.

Um nun eine besonders vorteilhafte, angenehme und hochwertige Bedienung der Bedienvorrichtung zu realisieren, ist es erfindungsgemäß vorgesehen, dass die Bewegungen des Abtriebselements in Abhängigkeit von den mittels der Erfassungseinrichtung erfassten Stellen, an denen die Person die Oberfläche des Bedienelements nacheinander berührt, derart variiert werden, dass die an den nacheinander berührten Stellen von dem Bedienelement nacheinander ausgeführten Bewegungen gleich sind. Mit anderen Worten, berührt die Person die berührungsempfindliche Oberfläche zunächst an einer ersten Stelle, so wird diese erste Stelle mittels der Erfassungseinrichtung erfasst. In der Folge wird das Bedienelement durch Bewegen des Abtriebselements und somit mittels der Bewegungseinrichtung derart bewegt, dass das Bedienelement an der ersten Stelle eine erste Bewegung oder Bewegungsart ausführt. Hierdurch nimmt die die berührungsempfindliche Oberfläche an der ersten Stelle berührende Person die erste Bewegung des Bedienelements haptisch beziehungsweise als haptische Rückmeldung wahr. Durch das Berühren der berührungsempfindlichen Oberfläche an der ersten Stelle wird beispielsweise wenigstens eine erste Eingabe von der Person durchgeführt, wodurch beispielsweise eine erste Funktion des Fahrzeugs bewirkt wird.

Daran anschließend berührt die Person beispielsweise die berührungsempfindliche Oberfläche an einer von der ersten Stelle unterschiedlichen, zweiten Stelle, wobei diese zweite Stelle mittels der Erfassungseinrichtung erfasst wird. In der Folge wird das Bedienelement durch Bewegen des Abtriebselements derart bewegt, dass das Bedienelement an der von der ersten Stelle unterschiedlichen zweiten Stelle die erste Bewegung beziehungsweise die erste Bewegungsart ausführt. Somit nimmt die die berührungsempfindliche Oberfläche an der von der ersten Stelle unterschiedlichen, zweiten Stelle berührende Person die gleiche Bewegung und somit die gleiche haptische Rückmeldung wie beim Berühren der ersten Stelle haptisch wahr. Durch das Berühren der berührungsempfindlichen Oberfläche an der zweiten Stelle wird von der Person beispielsweise wenigstens eine zweite Eingabe durchgeführt, mittels welcher beispielsweise wenigstens eine zweite Funktion, welche von der ersten Funktion beispielsweise unterschiedlich ist, des Fahrzeugs bewirkt wird.

Da die zweite Stelle von der ersten Stelle unterschiedlich ist, wird das Abtriebselement infolge der Berührung der ersten Stelle auf eine erste Art und infolge der Berührung der zweiten Stelle auf eine von der ersten Art unterschiedliche, zweite Art bewegt. Dies kann gegebenenfalls dazu führen, dass das Bedienelement insgesamt, das heißt als Ganzes, infolge der Berührung der ersten Stelle auf eine erste Art und infolge der Berührung der zweiten Stelle auf eine von der ersten Art unterschiedliche, zweite Art bewegt wird. Bezogen auf die jeweilige Stelle jedoch, das heißt lokal, führt das Bedienelement jedoch jeweils die gleiche Bewegung aus beziehungsweise wird das Bedienelement auf die gleiche Art bewegt, sodass die Person trotz der unterschiedlichen Bewegungen des Abtriebselements und der gegebenenfalls unterschiedlichen Bewegungen des Bedienelements insgesamt lokal, das heißt an der jeweiligen Stelle, die gleiche Bewegung des Bedienelements beziehungsweise der jeweiligen Stelle und somit jeweils die gleiche haptische Rückmeldung wahrnimmt. Somit kann mittels des erfindungsgemäßen Verfahrens vermieden werden, dass die Person, wenn diese die berührungsempfindliche Oberfläche an unterschiedlichen Stellen berührt, um dadurch unterschiedliche Eingaben durchzuführen, unterschiedliche haptische Rückmeldungen erfährt beziehungsweise unterschiedliche Bewegungen des Bedienelements haptisch wahrnimmt.

Hintergrund der Erfindung ist, dass zur Unterstützung der Bedienung von berührungsempfindlichen Bedienvorrichtungen, das heißt von Bedienvorrichtungen mit wenigstens einer berührungsempfindlichen Oberfläche, haptische Rückmeldungen, sogenannte Force Feedbacks, zum Einsatz kommen. Dies bedeutet, dass die Person beziehungsweise ein Nutzer der Bedienvorrichtung eine haptische Rückmeldung bei der Bedienung, das heißt beim Berühren der berührungsempfindlichen Oberfläche, bekommt. Bei der Berührung beziehungsweise Bedienung wird das Bedienelement beispielsweise mittels der Bewegungseinrichtung vibriert, das heißt in Vibration versetzt beziehungsweise mechanisch leicht beschleunigt, wodurch ein mechanischer Impuls beziehungsweise ein Haptikimpuls erzeugt wird, um dadurch eine haptische Rückmeldung zu erzielen.

Erfolgt nun beispielsweise dieser Haptikimpuls, welcher durch entsprechendes Ansteuern der Bewegungseinrichtung bewirkt wird, bei jeder Berührung beziehungsweise Betätigung oder Bedienung der Bedienvorrichtung mit gleicher Intensität, das heißt beispielsweise wird das Abtriebselement stets auf gleiche Art bewegt, so kann der Nutzer beziehungsweise die Person an den unterschiedlichen Stellen der berührungsempfindlichen Oberfläche unterschiedliche haptische Rückmeldungen wahrnehmen. Dies liegt beispielsweise daran, dass das Bedienelement beziehungsweise die berührungsempfindliche Oberfläche eine inhomogene Steifigkeit aufweist. Dies bedeutet beispielsweise, dass das Bedienelement beziehungsweise die berührungsempfindliche Oberfläche lokal unterschiedliche Steifigkeiten und/oder Dämpfungen aufweist, die dazu führen, dass - bei gleicher Ansteuerung beziehungsweise Bewegung des Abtriebselements - der Nutzer an den unterschiedlichen Stellen unterschiedliche haptische Rückmeldungen wahrnimmt. Ferner wurde gefunden, dass es zu diesen unterschiedlichen haptischen Rückmeldungen beispielsweise bei einer einseitigen Lagerung des Bedienelements kommen kann, da der mittels der Bewegungseinrichtung über das Abtriebselement in das Bedienelement eingeleitete Haptikimpuls beispielsweise mit zunehmender Entfernung von einer Stelle, an welcher der Haptikimpuls auf das Bedienelement ausgeübt wird, schwächer wird. Die zuvor genannten mechanischen Inhomogenitäten werden üblicherweise bei der Erzeugung der jeweiligen haptischen Rückmeldung nicht berücksichtigt, was zu den genannten unterschiedlichen haptischen Rückmeldungen beziehungsweise Eindrücken beim Nutzer führt.

Durch das erfindungsgemäße Verfahren ist es nun jedoch möglich, mechanische Inhomogenitäten und/oder eine Lagerung des Bedienelements zu berücksichtigen, sodass der Nutzer beziehungsweise die Person an zumindest nahezu jeder Stelle der berührungsempfindlichen Oberfläche die gleiche haptische Rückmeldung erfährt beziehungsweise wahrnimmt. Hierzu wird das Abtriebselement in Abhängigkeit von der Stelle, das heißt einem Berührort, auf unterschiedliche Art bewegt, woraus gegebenenfalls unterschiedliche Arten des Bedienelements insgesamt, das heißt global resultieren können. Jedoch wird das Abtriebselement derart auf unterschiedliche Art bewegt, dass die Person an den jeweiligen Stellen der berührungsempfindlichen Oberfläche, das heißt lokal die gleiche haptische Rückmeldung, das heißt bezogen auf die jeweilige Stelle die gleiche Bewegung des Bedienelements haptisch wahrnimmt. Hierdurch ist es insbesondere möglich, unterschiedliche lokale beziehungsweise ortsabhängige Dämpfungen und/oder Steifigkeiten des Bedienelements beim Erzeugen des zuvor beschriebenen Haptikimpulses zu berücksichtigen, wodurch der subjektive Eindruck des Haptikimpulses, das heißt die Wahrnehmung der haptischen Rückmeldung, unabhängig vom Berührort ist. Dadurch kann eine besonders angenehme, hochwertig anmutende und vorteilhafte Bedienung der Bedienvorrichtung geschaffen werden.

Außerdem ist das Bedienelement mittels des Abtriebselements um eine Schwenkachse verschwenkbar, wobei mit zunehmendem Abstand zwischen der Schwenkachse und der Stelle, an welcher die Person die Oberfläche berührt, die Amplitude und/oder die Frequenz der Bewegung des Abtriebselements verringert wird. Dieser Ausführungsform liegt die Erkenntnis zugrunde, dass die Auslenkung des Bedienelements um die Schwenkachse mit zunehmendem Abstand zwischen der Schwenkachse und der Stelle, an der die Person die berührungsempfindliche Oberfläche berührt, zunimmt bei gleicher Auslenkung, insbesondere Winkelauslenkung, des Bedienelements um die Schwenkachse. Berührt die Person beispielsweise die berührungsempfindliche Oberfläche an einer ersten Stelle und danach an einer von der ersten Stelle unterschiedlichen, zweiten Stelle, welche weiter von der Schwenkachse beabstandet ist als die erste Stelle, so wird beispielsweise das Bedienelement mittels des Abtriebselements infolge der Berührung der zweiten Stelle weniger stark ausgelenkt als infolge der Berührung der ersten Stelle, sodass die jeweiligen Stellen an sich um den gleichen Weg ausgelenkt werden, das heißt den gleichen Weg zurücklegen, sodass die Person sowohl beim Berühren der ersten Stelle als auch beim Berühren der zweiten Stelle die gleiche haptische Rückmeldung wahrnimmt.

Des Weiteren ist es vorgesehen, dass das Abtriebselement an wenigstens einer Koppelstelle mit dem Bedienelement gekoppelt ist, wobei mit zunehmendem Abstand zwischen der Koppelstelle und der Stelle, an welcher die Person die Oberfläche berührt, die Amplitude und/oder die Frequenz der Bewegung des Abtriebselements erhöht wird. Dieser Ausführungsform liegt die Erkenntnis zugrunde, dass die Person mit zunehmendem Abstand zur Koppelstelle einen durch Bewegen des Abtriebselements bewirkten Impuls des Bedienelements immer schwächer wahrnimmt. Daher ist es von Vorteil, das Abtriebselement stärker, das heißt beispielsweise mit einer höheren Amplitude und/oder höheren Frequenz, zu bewegen, je weiter die Stelle, an welcher die Person die berührungsempfindliche Oberfläche berührt, von der Koppelstelle entfernt ist, sodass die Person die gleiche haptische Rückmeldung wahrnimmt, wenn die Person die berührungsempfindliche Oberfläche an einer Stelle in der Nähe der Koppelstelle oder an einer demgegenüber weiter von der Koppelstelle weiter entfernten Stelle berührt.

Bei einer vorteilhaften Ausführungsform der Erfindung werden an den Stellen, an denen die Person die berührungsempfindliche Oberfläche berührt, unterschiedliche Dämpfungen und/oder Steifigkeiten des Bedienelements ermittelt, wobei die Bewegungen in Abhängigkeit von den ermittelten, unterschiedlichen Dämpfungen und/oder Steifigkeiten variiert werden. Die unterschiedlichen Dämpfungen und/oder Steifigkeiten stellen mechanische Inhomogenitäten dar, welche beispielsweise empirisch ermittelt werden. Alternativ ist es denkbar, die Dämpfungen und/oder Steifigkeiten, das heißt die Inhomogenitäten anhand eines Simulationsmodells mittels einer Recheneinrichtung der Bedienvorrichtung zu ermitteln. Mit anderen Worten wird beispielsweise ein mechanisch-mathematisches Modell verwendet, welches die mechanischen Eigenschaften des Bedienelements, insbesondere der Bedienvorrichtung, abbildet. Anhand dieses Modells können die Inhomogenitäten ermittelt und in der Folge berücksichtigt werden.

Die Bewegungseinrichtung umfasst beispielsweise einen Aktor, welcher insbesondere als elektrischer Aktor, insbesondere Elektromagnet oder Elektromotor, ausgebildet sein kann. Der Aktor umfasst dabei beispielsweise einen Stator beziehungsweise ein stehendes Teil und einen relativ zu dem Stator bewegbaren Läufer beziehungsweise ein bewegbares Teil. Der Läufer ist beispielsweise translatorisch relativ zum Stator bewegbar. Alternativ oder zusätzlich ist es denkbar, dass der Läufer relativ zum Stator um eine Drehachse drehbar ist, sodass der Läufer beispielsweise ein Rotor ist. Der Läufer ist dabei Bestandteil des Abtriebselements oder das Abtriebselement an sich, wobei die Bewegungseinrichtung über das Abtriebselement mit dem Bedienelement gekoppelt ist. Dadurch ist das Bedienelement über das Abtriebselement mittels der Bewegungseinrichtung bewegbar, indem das Abtriebselement beziehungsweise der Läufer relativ zum Stator bewegt wird.

Beispielsweise ist die Recheneinrichtung mit der Bewegungseinrichtung und der Erfassungseinrichtung gekoppelt. In Abhängigkeit von den mittels der Erfassungseinrichtung erfassten Stellen wird die Bewegungseinrichtung mittels der Recheneinrichtung angesteuert, wobei durch Variieren der Ansteuerung die Bewegung des Abtriebselements variiert werden kann.

Eine weitere Ausführungsform zeichnet sich dadurch aus, dass die Bewegungen des Abtriebselements hinsichtlich ihrer Frequenz und/oder Amplitude variiert werden. Hierdurch ist es möglich, die Bewegungen hinsichtlich ihrer Intensität, ihres Musters beziehungsweise ihrer Abfolge und/oder ihrer Richtung zu variieren, wodurch mechanische Inhomogenitäten besonders gut berücksichtigt werden können. Somit kann sichergestellt werden, dass die Person an zumindest nahezu jeder Stelle der berührungsempfindlichen Oberfläche die gleiche haptische Rückmeldung wahrnimmt.

Ein zweiter Aspekt der Erfindung betrifft eine Bedienvorrichtung für ein Fahrzeug, insbesondere ein Kraftfahrzeug wie beispielsweise ein Personenkraftfahrzeug. Die Bedienvorrichtung umfasst wenigstens ein eine berührungsempfindliche Oberfläche aufweisendes Bedienelement, mittels welchem von einer Person beziehungsweise einem Nutzer durch Berühren der Oberfläche Eingaben in die Bedienvorrichtung durchführbar sind. Ferner umfasst die Bedienvorrichtung eine Erfassungseinrichtung, mittels welcher jeweilige Stellen, an denen die Person die Oberfläche nacheinander berührt, erfassbar sind. Außerdem umfasst die Bedienvorrichtung eine Bewegungseinrichtung, welche zumindest ein Abtriebselement aufweist, mittels welchem zur Erzeugung jeweiliger haptischer Rückmeldungen an die Person infolge des jeweiligen Berührens der Stellen der Oberfläche das Bedienelement durch Bewegen des Abtriebselements bewegbar ist.

Um eine besonders vorteilhafte, einfache und hochwertige Bedienung der Bedienvorrichtung zu realisieren, ist es erfindungsgemäß vorgesehen, dass die Bedienvorrichtung dazu ausgebildet ist, die Bewegungen des Abtriebselements in Abhängigkeit von den mittels der Erfassungseinrichtung erfassten Stellen, an denen die Person die Oberfläche des Bedienelements nacheinander berührt, derart zu variieren, dass die an den nacheinander berührten Stellen von dem Bedienelement nacheinander ausgeführten Bewegungen gleich sind. Vorteilhafte Ausgestaltungen des ersten Aspekts der Erfindung sind als vorteilhafte Ausgestaltungen des zweiten Aspekts der Erfindung anzusehen und umgekehrt.

Des Weiteren ist das Bedienelement mittels des Abtriebselements um eine Schwenkachse verschwenkbar, wobei die Bedienvorrichtung dazu ausgebildet ist, mit zunehmendem Abstand zwischen der Schwenkachse und der Stelle, an welche die Person die Oberfläche berührt, die Amplitude und/oder die Frequenz der Bewegung des Abtriebelements zu verringern. Außerdem ist das Abtriebselement an wenigstens einer Koppelstelle mit dem Bedienelement gekoppelt, wobei die Bedienvorrichtung dazu ausgebildet ist, mit zunehmendem Abstand zwischen der Koppelstelle und der Stelle, an welche die Person die Oberfläche berührt, die Amplitude und/oder die Frequenz der Bewegung des Abtriebelements zu erhöhen.

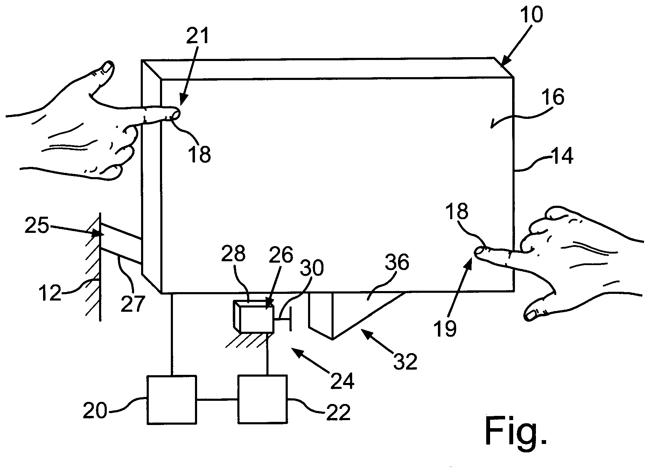

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. eine schematische und perspektivische Vorderansicht einer Bedienvorrichtung für ein Fahrzeug, welche dazu ausgebildet ist, Bewegungen eines Abtriebselements in Abhängigkeit von mittels einer Erfassungseinrichtung erfassten Stellen, an denen eine Person eine berührungsempfindliche Oberfläche eines Bedienelements nacheinander berührt, derart zu variieren, dass die an den nacheinander berührten Stellen von dem Bedienelement nacheinander ausgeführten Bewegungen gleich sind.

Die Fig. zeigt eine im Ganzen mit 10 bezeichnete Bedienvorrichtung für ein Fahrzeug, insbesondere ein Kraftfahrzeug wie beispielsweise ein Personenkraftfahrzeug. Die Bedienvorrichtung 10 ist im Innenraum des Fahrzeugs angeordnet, wobei in dem Innenraum weitere Bauelemente des Fahrzeugs angeordnet sind. Bei einem solchen Bauelement handelt es sich um eine Instrumententafel 12, an welcher die Bedienvorrichtung 10 gehalten ist. Die Bedienvorrichtung 10 umfasst wenigstens ein Bedienelement 14, welches als berührungsempfindlicher Bildschirm, das heißt als Touchscreen, ausgebildet sein kann. Alternativ dazu ist es denkbar, dass das Bedienelement 14 als Touchpad ausgebildet ist. Das Bedienelement 14 weist dabei wenigstens eine berührungsempfindliche Oberfläche 16 auf, über welche eine sich im Innenraum des Fahrzeugs aufhaltende Person Eingaben in die Bedienvorrichtung 10 vornehmen kann. Mit anderen Worten sind mittels des Bedienelements 14 von der Person durch Berühren der Oberfläche 16 Eingaben in die Bedienvorrichtung 10 durchführbar. Hierzu berührt die Person beispielsweise mit ihrem Finger 18 die Oberfläche 16 an jeweiligen, unterschiedlichen Stellen 19 und 21. Durch sukzessives, das heißt aufeinanderfolgendes Berühren der Oberfläche 16 an den jeweiligen, unterschiedlichen Stellen 19 und 21 können beispielsweise jeweilige, unterschiedliche Funktionen des Fahrzeugs von der Person ausgelöst beziehungsweise bewirkt werden.

Die Bedienvorrichtung 10 umfasst auch eine in der Fig. besonders schematisch dargestellte Erfassungseinrichtung 20, mittels welcher jeweilige Stellen, an denen die Person insbesondere mit ihrem Finger 18 die berührungsempfindliche Oberfläche 16 nacheinander berührt, erfassbar sind. Dies bedeutet, dass mittels der Erfassungseinrichtung 20 beispielsweise die Stellen 19 und 21, an denen die Person die Oberfläche 16 nacheinander berührt, erfassbar sind.

Die Bedienvorrichtung 10 umfasst auch eine Recheneinrichtung 22, welche beispielsweise ein Steuergerät ist. Die Recheneinrichtung 22 ist mit der Erfassungseinrichtung 20 verbunden. Die Erfassungseinrichtung 20 stellt wenigstens ein die erfassten Stellen charakterisierendes Signal bereit, welches an die Recheneinrichtung 22 übertragen und von der Recheneinrichtung 22 empfangen wird. Dadurch kann die Recheneinrichtung 22 ermitteln, an welchen Stellen die Person mit ihrem Finger 18 die berührungsempfindliche Oberfläche 16 berührt.

Die Bedienvorrichtung 10 umfasst darüber hinaus eine Bewegungseinrichtung 24, welche beispielsweise an der Instrumententafel 12 gehalten ist. In der Fig. ist auch eine Halteeinrichtung 25 erkennbar, über welche das Bedienelement 14 an der Instrumententafel 12 gehalten, insbesondere gelagert ist. Vorliegend ist das Bedienelement 14 mittels der Halteeinrichtung 25 federnd an der Instrumententafel 12 gelagert. Hierzu umfasst die Halteeinrichtung 25 wenigstens ein Federelement 27, mittels welchem das Bedienelement 14 federnd an der Instrumententafel gelagert beziehungsweise gehalten ist. Die Halteeinrichtung 25 erlaubt somit Relativbewegungen zwischen dem Bedienelement 14 und der Instrumententafel 12. Wird beispielsweise das Bedienelement 14 aus einer Ruhestellung, in welcher das Federelement 27 entspannt ist, in eine Betätigungsstellung bewegt, so geht damit eine elastische Verformung des Federelement 27 einher, das somit in der Betätigungsstellung gespannt, insbesondere stärker gespannt, ist als in der Ruhestellung. Somit stelle beispielsweise das Federelement 27 in der Betätigungsstellung eine Federkraft bereit, welche auf das Bedienelement 14 wirkt. Mittels dieser Federkraft kann das Bedienelement 14 unter zumindest teilweisem Entspannen des Federelements 27 aus der Betätigungsstellung zurück in die Ruhestellung bewegt werden.

Die Bewegungseinrichtung 24 umfasst einen Aktor 26, welcher vorliegend als elektrischer Aktor, insbesondere Elektromotor oder Elektromagnet, ausgebildet ist. Der Aktor 26 umfasst ein stehendes Teil in Form eines Jochs 28 sowie einen relativ zum Joch 28 bewegbares Teil in Form eines Ankers 30, welcher Bestandteil eines Abtriebselements 32 der Bewegungseinrichtung 24 ist. Der Anker 30 ist beispielsweise relativ zum Joch 28 translatorisch bewegbar, indem beispielsweise eine in der Fig. nicht erkennbare Spule des Aktors 26 bestromt, das heißt mit elektrischen Strom versorgt und somit durchflossen wird.

Das Abtriebselement 32 umfasst ferner ein am Bedienelement 14 gehaltenes Koppelelement 36, welches mit dem Anker 30 zusammenwirken kann. Insgesamt ist aus der Fig. erkennbar, dass die Bewegungseinrichtung 24 über das Abtriebselement 32, das heißt den Anker 30 und das Koppelelement 36, mit dem Bedienelement 14 gekoppelt ist, sodass das Bedienelement 14 mittels der Bewegungseinrichtung 24, das heißt mittels des Aktors 26 über das Abtriebselement 32, das heißt über das Koppelelement 36 und den Anker 30, bewegbar ist. Dies bedeutet, dass das Bedienelement 14 durch Bewegen des Abtriebselements 32 bewegbar ist, wodurch jeweilige haptische Rückmeldungen an die die Oberfläche 16 an jeweiligen Stellen berührende Person infolge des jeweiligen Berührens der Stellen der Oberfläche 16 erzeugt werden.

In der Fig. ist vorliegend veranschaulicht, dass die Person mit ihrem Finger 18 die berührungsempfindliche Oberfläche 16 an der Stelle 21 berührt, welche einen ersten Abstand zu dem Aktor 26 beziehungsweise dem Federelement 27 aufweist. Ferner ist es möglich, dass die Person mit ihrem Finger 18 die berührungsempfindliche Oberfläche 16 an der von der Stelle 21 unterschiedlichen Stelle 19 berührt, wobei die Stelle 19 einen vom ersten Abstand unterschiedlichen, zweiten Abstand zu dem Aktor 26 beziehungsweise dem Federelement 27 aufweist. Durch Berühren der Oberfläche 16 an der Stelle 21 wird beispielsweise wenigstens eine erste Funktion des Fahrzeugs von der Person bewirkt, wobei durch Berühren der berührungsempfindlichen Oberfläche 16 an der Stelle 19 beispielsweise wenigstens eine von der ersten Funktion unterschiedliche, zweite Funktion des Fahrzeugs von der Person bewirkt wird. Berührt die Person die berührungsempfindliche Oberfläche 16 zunächst an der Stelle 21, so wird das Abtriebselement 32 mittels der Bewegungseinrichtung 24, insbesondere mittels des Aktors 26, bewegt, um dadurch eine haptische Rückmeldung an die Person zu erzeugen. Berührt die Person die Oberfläche 16 an der Stelle 19, so wird dann das Abtriebselement 32 mittels des Aktors 26 bewegt, um eine haptische Rückmeldung an die Person zu erzeugen.

Die Recheneinrichtung 22 ist dabei mit der Bewegungseinrichtung 24, insbesondere dem Aktor 26, verbunden, sodass der Aktor 26 mittels der Recheneinrichtung 22 angesteuert werden kann. Durch eine solche Ansteuerung kann mittels der Recheneinrichtung 22 über den Aktor 26 die Bewegung des Abtriebselements 32 bewirkt werden. Dadurch ist es möglich, den Aktor 26 mittels der Recheneinrichtung 22 in Abhängigkeit von den mittels der Erfassungseinrichtung 20 erfassten Stellen 19 und 21 anzusteuern, sodass das Abtriebselement 32 in Abhängigkeit von den mittels der Erfassungseinrichtung 20 erfassten Stellen 19 und 21, an denen die Person die Oberfläche 16 nacheinander berührt, mittels des Aktors 26 bewegt wird. Ferner ist es möglich, die Ansteuerung des Aktors 26 in Abhängigkeit von den mittels der Erfassungseinrichtung 20 erfassten Stellen 19 und 21 zu variieren, sodass die mittels des Aktors 26 zu bewirkenden Bewegungen des Abtriebselements 32 in Abhängigkeit von den erfassten Stellen 19 und 21 variiert werden können. Mit anderen Worten ist es im Rahmen eines Verfahrens zum Betreiben der Bedienvorrichtung 10 vorgesehen, dass die Bewegungen des Abtriebselements 32 in Abhängigkeit von den mittels der Erfassungseinrichtung 20 erfassten Stellen 19 und 21, an denen die Person die berührungsempfindliche Oberfläche 16 berührt, variiert werden.

Um dabei eine besonders vorteilhafte, angenehme und hochwertige Bedienung der Bedienvorrichtung 10 zu realisieren, werden die Bewegungen des Abtriebselements 32 in Abhängigkeit von dem mittels der Erfassungseinrichtung 20 erfassten Stellen 19 und 21, an denen die Person die Oberfläche 16 des Bedienelements 14 nacheinander berührt, derart variiert, dass die an den nacheinander berührten Stellen 19 und 21 von dem Bedienelement 14 nacheinander ausgeführten Bewegungen gleich sind. Mit anderen Worten, berührt die Person mit ihrem Finger 18 die Oberfläche 16 an der Stelle 21, so wird das Abtriebselement 32 mittels des Aktors 26 beziehungsweise der Spule auf eine erste Art derart bewegt, dass das Bedienelement 14 an der Stelle 21 eine erste Bewegung ausführt.

Berührt die Person im Anschluss daran die berührungsempfindliche Oberfläche 16 an der von der Stelle 21 unterschiedlichen Stelle 19, so wird das Abtriebselement 32 mittels des Aktors 26, insbesondere der Spule, auf eine von der ersten Art unterschiedliche, zweite Art derart bewegt, dass das Bedienelement 14 an der von der Stelle 21 unterschiedlichen Stelle 19 die erste Bewegung ausführt. Die unterschiedlichen Arten, auf denen das Bedienelement 14 jeweils bewegt wird, können insgesamt dazu führen, dass das Bedienelement 14 insgesamt betrachtet unterschiedlich bewegt wird, jedoch führt das Bedienelement 14 lokal, das heißt bezogen auf die Stelle 21 und die Stelle 19, die gleiche Bewegung aus, sodass die die Stelle 21 und die Stelle 19 nacheinander berührende Person jeweils die gleiche haptische Rückmeldung wahrnimmt beziehungsweise erfährt. Dies bedeutet, dass die die Oberfläche 16 berührende Person sowohl an der Stelle 21 als auch an der Stelle 19 die gleiche Intensität, mit welcher das Bedienelement 14 mittels der Bewegungseinrichtung 24 bewegt wird, und in der Folge die gleiche haptische Rückmeldung wahrnimmt.

Hierdurch ist es möglich, mechanische Inhomogenitäten, das heißt beispielsweise lokal unterschiedliche Dämpfungen und/oder Steifigkeiten des Bedienelements 14, zu berücksichtigen und zu kompensieren, sodass die Person trotz der mechanischen Inhomogenität an zumindest nahezu jeder Stelle der Oberfläche 16 die gleiche haptische Rückmeldung erfährt.

Im Folgenden wird die Realisierung der zumindest nahezu immer gleichen haptischen Rückmeldung an einem konkreten Beispiel beschrieben: Das Bedienelement 14 ist beispielsweise um eine Schwenkachse mittels der Bewegungseinrichtung 24 verschwenkbar, das heißt rotatorisch bewegbar. Der erste Abstand ist dabei beispielsweise ein erster Abstand zwischen der Stelle 21 und der Schwenkachse, wobei beispielsweise der genannte zweite Abstand ein zweiter Abstand zwischen der Stelle 19 der Oberfläche 16 und der Schwenkachse ist. Beispielsweise ist der zweite Abstand größer als der erste Abstand. Wird nun das Bedienelement 14 mittels des Aktors 26 um die Schwenkachse um einen ersten Winkelbetrag verschwenkt, das heißt ausgelenkt, so wird die Stelle 21 um einen ersten Weg bewegt beziehungsweise ausgelenkt. Gleichzeitig wird die Stelle 19 um einen zweiten Weg bewegt beziehungsweise ausgelenkt, wobei der zweite Weg größer als der erste Weg ist, da die Stelle 19 weiter von der Schwenkachse entfernt ist als die Stelle 21. Beispielsweise wird das Bedienelement 14 über das Abtriebselement 32 um den ersten Winkelbetrag ausgelenkt, wenn die Person die Stelle 21 berührt.

Hierdurch erfährt die Person eine haptische Rückmeldung. Um nun zu vermeiden, dass die Person eine andere haptische Rückmeldung erfährt, wenn die Person nach dem Berühren der Stelle 21 nicht die Stelle 21, sondern die Stelle 19 berührt, wird das Bedienelement 14 beim Berühren der Stelle 19 beziehungsweise infolge des Berührens der Stelle 19 nicht um den ersten Winkelbetrag, sondern um einen zweiten Winkelbetrag über das Abtriebselement 32 ausgelenkt, wobei der zweite Winkelbetrag geringer als der erste Winkelbetrag ist. Der zweite Winkelbetrag wird dabei beispielsweise mittels der Recheneinrichtung 22 derart eingestellt, dass die Stelle 19 infolge des Berührens der Stelle 19 um den ersten Weg um die Schwenkachse ausgelenkt wird. Dadurch nimmt die Person über ihren Finger 18 sowohl beim Berühren der Stelle 21 als auch beim daran anschließenden Berühren der Stelle 19 die gleiche haptische Rückmeldung wahr, wodurch eine besonders angenehme und hochwertig anmutende Bedienung der Bedienvorrichtung 10 realisiert werden kann. Die zuvor geschilderte Variierung der Bewegung des Bedienelements 14 erfolgt über das Variieren der Bewegung des Abtriebselements 32, um dadurch mechanische Inhomogenitäten und/oder eine einseitige Lagerung des Bedienelements 14 kompensieren zu können.

An dieser Stelle sei explizit erwähnt, dass das Bedienelement 14 nicht zwangsläufig um eine Schwenkachse verschwenkbar sein muss. Alternativ oder zusätzlich ist es möglich, dass das Bedienelement 14 - wie es in der Fig. der Fall ist - translatorisch relativ zur Instrumententafel 12 bewegbar ist, wobei das am Beispiel der Verschwenkbarkeit beschriebene Bewegungsprinzip des Bedienelements 14 ohne Weiteres auch auf eine translatorische Bewegbarkeit angewendet und übertragen werden kann, um dadurch an zumindest nahezu jeder Stelle der Oberfläche 16 die von der Person haptisch wahrnehmbare, gleiche haptische Rückmeldung zu erzeugen.

Alternativ oder zusätzlich ist es möglich, in Abhängigkeit von den mittels der Erfassungseinrichtung 20 erfassten Stellen 19 und 21, an denen die Person die Oberfläche 16 berührt, unterschiedlich intensive mechanische Impulse über das Abtriebselement 32 auf das Bedienelement 14 auszuüben, um dadurch zu gewährleisten, dass die Person an zumindest nahezu jeder Stelle der Oberfläche 16 die gleiche haptische Rückmeldung erfährt. Der mechanische Impuls kann dabei je nach Stellen, an denen die Person die Oberfläche 16 berührt, stärker, schwächer, zeitlich länger, zeitlich kürzer und/oder hinsichtlich seiner Form beziehungsweise seines Musters auf das Bedienelement 14 über das Abtriebselement 32 von dem Aktor 26 aufgebracht werden. Der jeweilige, zur jeweiligen Stelle gehörende Impuls ist beispielsweise in einer Speichereinrichtung der Recheneinrichtung 22 gespeichert, wobei der jeweilige auszuübende Impuls beispielsweise in einem Kennfeld abgelegt beziehungsweise gespeichert werden kann. Aus diesem Kennfeld wird in Abhängigkeit von der mittels der Erfassungseinrichtung 20 erfassten Stelle, an welcher die Person die Oberfläche 16 berührt, der Impuls ausgewählt und über eine Elektronik beziehungsweise eine Verstärkereinheit im Aktor 26 zugeführt.

Dadurch lässt sich eine ortsabhängige Impulserzeugung realisieren, wozu unterschiedliche Aktoren zum Einsatz kommen können. Mit anderen Worten kann der Aktor 26 als elektromagnetischer Aktor, piezoelektrischer Aktor, elektrostatischer Aktor oder elektropolymerer Aktor ausgebildet sein.

## Patentansprüche

1. Verfahren zum Betreiben einer Bedienvorrichtung (10) für ein Fahrzeug, insbesondere ein Kraftfahrzeug, mit wenigstens einem eine berührungsempfindliche Oberfläche (16) aufweisenden Bedienelement (14), mittels welchem von einer Person durch Berühren der Oberfläche (16) Eingaben in die Bedienvorrichtung (10) durchführbar sind, mit einer Erfassungseinrichtung (20), mittels welcher jeweilige Stellen (19, 21), an denen die Person die Oberfläche (16) nacheinander berührt, erfasst werden, und mit einer Bewegungseinrichtung (24), welche zumindest ein Abtriebselement (32) aufweist, mittels welchem zur Erzeugung jeweiliger haptischer Rückmeldungen an die Person infolge des jeweiligen Berührens der Stellen (19, 21) der Oberfläche (16) das Bedienelement (14) durch Bewegen des Abtriebselements (32) bewegt wird,
**dadurch gekennzeichnet, dass**
die Bewegungen des Abtriebselements (32) in Abhängigkeit von den mittels der Erfassungseinrichtung (20) erfassten Stellen (19, 21), an denen die Person die Oberfläche (16) des Bedienelements (20) nacheinander berührt, derart variiert werden, dass die an den nacheinander berührten Stellen (19, 21) von dem Bedienelement (14) nacheinander ausgeführten Bewegungen gleich sind, wobei das Bedienelement (14) mittels des Abtriebselements (32) um eine Schwenkachse verschwenkbar ist, und wobei mit zunehmendem Abstand zwischen der Schwenkachse und der Stelle (19, 21), an welcher die Person die Oberfläche (16) berührt, die Amplitude und/oder die Frequenz der Bewegung des Abtriebselements (32) verringert wird, wobei das Abtriebselement (32) an wenigstens einer Koppelstelle mit dem Bedienelement (14) gekoppelt ist, und wobei mit zunehmendem Abstand zwischen der Koppelstelle und der Stelle (19, 21), an welcher die Person die Oberfläche (16) berührt, die Amplitude und/oder die Frequenz der Bewegung des Abtriebselements (32) erhöht wird.

2. Verfahren nach Anspruch 1,
**dadurch gekennzeichnet, dass**
an den Stellen (19, 21) unterschiedliche Dämpfungen und/oder Steifigkeiten des Bedienelements (14) ermittelt werden, wobei die Bewegungen in Abhängigkeit von den ermittelten, unterschiedlichen Dämpfungen und/oder Steifigkeit variiert werden.

3. Verfahren nach Anspruch 2,
**dadurch gekennzeichnet, dass**
die Dämpfungen und/oder Steifigkeiten anhand eines Simulationsmodells mittels einer Recheneinrichtung (22) ermittelt werden.

4. Verfahren nach einem der vorhergehenden Ansprüche,
**dadurch gekennzeichnet, dass**
die Bewegungen des Abtriebselements (32) hinsichtlich ihrer Frequenz und/oder Amplitude variiert werden.

5. Bedienvorrichtung (10) für ein Fahrzeug, insbesondere ein Kraftfahrzeug, mit wenigstens einem eine berührungsempfindliche Oberfläche (16) aufweisenden Bedienelement (14), mittels welchem von einer Person durch Berühren der Oberfläche (16) Eingaben in die Bedienvorrichtung (10) durchführbar sind, mit einer Erfassungseinrichtung (20), mittels welcher jeweilige Stellen (19, 21), an denen die Person die Oberfläche (16) nacheinander berührt, erfassbar sind, und mit einer Bewegungseinrichtung (24), welche zumindest ein Abtriebselement (32) aufweist, mittels welchem zur Erzeugung jeweiliger haptischer Rückmeldungen an die Person infolge des jeweiligen Berührens der Stellen (19, 21) der Oberfläche (16) das Bedienelement (14) durch Bewegen des Abtriebselements (32) bewegbar ist,
**dadurch gekennzeichnet, dass**
die Bedienvorrichtung (10) dazu ausgebildet ist, die Bewegungen des Abtriebselements (32) in Abhängigkeit von den mittels der Erfassungseinrichtung (20) erfassten Stellen (19, 21), an denen die Person die Oberfläche (16) des Bedienelements (14) nacheinander berührt, derart zu variieren, dass die an den nacheinander berührten Stellen (19, 21) von dem Bedienelement (14) nacheinander ausgeführten Bewegungen gleich sind, wobei das Bedienelement (14) mittels des Abtriebselements (32) um eine Schwenkachse verschwenkbar ist, und die Bedienvorrichtung (10) dazu ausgebildet ist, mit zunehmendem Abstand zwischen der Schwenkachse und der Stelle (19, 21), an welcher die Person die Oberfläche (16) berührt, die Amplitude und/oder die Frequenz der Bewegung des Abtriebselements (32) zu verringern, wobei das Abtriebselement (32) an wenigstens einer Koppelstelle mit dem Bedienelement (14) gekoppelt ist, und wobei die Bedienvorrichtung (10) dazu ausgebildet ist, mit zunehmendem Abstand zwischen der Koppelstelle und der Stelle (19, 21), an welcher die Person die Oberfläche (16) berührt, die Amplitude und/oder die Frequenz der Bewegung des Abtriebselements (32) zu erhöhen.

## Claims

1. Method for operating an operator control apparatus (10) for a vehicle, in particular a motor vehicle, comprising at least one operator control element (14) which has a touch-sensitive surface (16), by means of which a person can make inputs into the operator control apparatus (10) by touching the surface (16), comprising a detector device (20) by means of which respective points (19, 21) at which the person touches the surface (16) in succession are detected, and comprising a movement device (24), which has at least one output element (32) by means of which the operator control element (14) is moved by movement of the output element (32) in order to generate respective haptic feedback to the person as a result of the points (19, 21) of the surface (16) respectively being touched,
**characterised in that**
the movements of the output element (32) are varied depending on the points (19, 21), which are detected by means of the detection device (20), at which the person touches the surface (16) of the operator control element (20) in succession in such a manner that the movements which are executed in succession at the points (19, 21) which ae touched in succession by the operator control element (14) are the same, wherein the operator control element (14) is pivotable about a pivot axis by means of the output element (32), and wherein with increasing distance between the pivot axis and the points (19, 21), at which the person touches the surface (16), the amplitude and/or the frequency of the movement of the output element (32) is reduced, wherein the output element (32) is coupled at at least one coupling point to the operator control element (14), and wherein with increasing distance between the coupling point and the point (19, 21), at which the person touches the surface (16), the amplitude and/or the frequency of the movement of the output element (32) is increased.

2. Method according to claim 1,
**characterised in that**
at the points (19, 21) different attenuations and rigidities of the operator control element (14) are determined, wherein the movements are varied depending on the determined, different attenuations and/or rigidities.

3. Method according to claim 2,
**characterised in that**
the attenuations and/or rigidities are determined by means of a simulation model by means of a computing device (22).

4. Method according to any one of the preceding claims,
**characterised in that**
movements of the output element (32) are varied with respect to their frequency and/or amplitude.

5. Operator control apparatus (10) for a vehicle, in particular a motor vehicle, comprising at least one operator control element (14) which has a touch-sensitive surface (16), by means of which a person can make inputs into the operator control apparatus (10) by touching the surface (16), comprising a detector device (20) by means of which respective points (19, 21) at which the person touches the surface (16) in succession can be detected, and comprising a movement device (24), which has at least one output element (32) by means of which the operator control element (14) can be moved by movement of the output element (32) in order to generate respective haptic feedback to the person as a result of the points (19, 21) of the surface (16) respectively being touched,
**characterised in that**
the operator control apparatus (10) is designed to vary the movements of the output element (32) depending on the points (19, 21), which are detected by means of the detection device (20), at which the person touches the surface (16) of the operator control element (14) in succession in such a manner that the movements which are executed in succession at the points (19, 21) which are touched in succession by the operator control element (14) are the same, wherein the operator control element (14) is pivotable about a pivot axis by means of the output element (32), and the operator control apparatus (10) is designed to reduce the amplitude and/or the frequency of the movement of the output element (32) with increasing distance between the pivot axis and the points (19, 21), at which the person touches the surface (16), wherein the output element (32) is coupled at at least one coupling point to the operator control element (14), and wherein the operator control apparatus (10) is designed to increase the amplitude and/or the frequency of the movement of the output element (32) with increasing distance between the coupling point and the point (19, 21), at which the person touches the surface (16).

## Revendications

1. Procédé d'exploitation d'un dispositif de commande (10) pour un véhicule, en particulier un véhicule automobile, avec au moins un élément de commande (14) présentant une surface tactile (16), au moyen duquel des saisies dans le dispositif de commande (10) peuvent être effectuées par une personne par effleurement de la surface (16), avec un dispositif capteur (20) au moyen duquel sont captés des points respectifs (19, 21) dont la personne effleure la surface (16) successivement, et avec un dispositif de mouvement (24), qui présente au moins un élément de sortie (32), au moyen duquel l'élément de commande (14) est déplacé par déplacement de l'élément de sortie (32) pour produire des rétroactions haptiques respectives sur la personne à la suite de l'effleurement respectif des points (19, 21) de la surface (16),
**caractérisé en ce que**
les déplacements de l'élément de sortie (32) sont modifiés en fonction des points (19, 21) captés au moyen du dispositif capteur (20), dont la personne effleure la surface (16) de l'élément de commande (20) successivement en sorte que les déplacements effectués successivement aux points (19, 21) effleurés successivement par l'élément de commande (14) soient les mêmes, dans lequel l'élément de commande (14) peut pivoter autour d'un axe pivot au moyen de l'élément de sortie (32) et dans lequel, à mesure que croît la distance entre l'axe pivot et le point (19, 21), dont la personne effleure la surface (16), l'amplitude et/ou la fréquence du déplacement de l'élément de sortie (32) est ou sont réduites, dans lequel l'élément de sortie (32) est couplé en au moins un point de couplage à l'élément de commande (14) et dans lequel, à mesure que croît la distance entre le point de couplage et le point (19, 21), dont la personne effleure la surface (16), l'amplitude et/ou la fréquence de l'élément de sortie (32) est ou sont augmentées.

2. Procédé selon la revendication 1,
**caractérisé en ce que**
aux points (19, 21), différents amortissements et/ou raideurs de l'élément de commande (14) sont détectés, dans lequel les déplacements sont modifiés en fonction des différents amortissements et/ou raideur détectés.

3. Procédé selon la revendication 2,
**caractérisé en ce que**
les amortissements et/ou les raideurs sont détectés sur la base d'un modèle de simulation au moyen d'un dispositif de calcul (22).

4. Procédé selon l'une quelconque des revendications précédentes,
**caractérisé en ce que**
les déplacements de l'élément de sortie (32) sont modifiés en tenant compte de leur fréquence et/ou de leur amplitude.

5. Dispositif de commande (10) pour un véhicule, en particulier un véhicule automobile, avec au moins un élément de commande (14) présentant une surface tactile (16), au moyen duquel des saisies dans le dispositif de commande (10) peuvent être effectuées par une personne par effleurement de la surface (16), avec un dispositif capteur (20) au moyen duquel peuvent être captés des points respectifs (19, 21) dont la personne effleure la surface (16) successivement, et avec un dispositif de mouvement (24) qui présente au moins un élément de sortie (32) au moyen duquel l'élément de commande (14) peut être déplacé par déplacement de l'élément de sortie (32) pour produire des rétroactions haptiques respective sur la personne à la suite de l'effleurement respectif des points (19, 21) de la surface (16),
**caractérisé en ce que**
le dispositif de commande (10) est conçu de manière à modifier les déplacements de l'élément de sortie (32) en fonction des points (19, 21) captés au moyen du dispositif capteur (20), dont la personne effleure la surface (16) de l'élément de commande (14) successivement en sorte que les déplacements effectués successivement aux points (19, 21) effleurés successivement par l'élément de commande (14) soient les mêmes, dans lequel l'élément de commande (14) peut pivoter autour d'un axe pivot au moyen de l'élément de sortie (32) et le dispositif de commande (10) est conçu de manière à, à mesure que croît la distance entre l'axe pivot et le point (19, 21), dont la personne effleure la surface (16), réduire l'amplitude et/ou la fréquence du déplacement de l'élément de sortie (32), dans lequel l'élément de sortie (32) est couplé en au moins un point de couplage à l'élément de commande (14) et dans lequel le dispositif de commande (10) est conçu de manière à, à mesure que croît la distance entre le point de couplage et le point (19, 21), dont la personne effleure la surface (16), augmenter l'amplitude et/ou la fréquence de l'élément de sortie (32).
